# EUROPÄISCHE PATENTSCHRIFT

(11) **EP 1 832 495 B1**
(45) Veröffentlichungstag und Bekanntmachung des Hinweises auf die Patenterteilung: **22.10.2008**
(21) Anmeldenummer: 07101786.7
(22) Anmeldetag: 06.02.2007
(51) Int. Cl.: B62D 1/10

(54) **Vorrichtung zur Lagerung eines Modulträgers am Lenkrad eines Kraftfahrzeugs**
Device for bearing a module mounting on the steering wheel of a motor vehicle
Dispositif destiné au stockage d'un support de module sur le volant d'un véhicule automobile

(30) Priorität: 07.03.2006 DE 202006003920 U
(43) Veröffentlichungstag der Anmeldung: 12.09.2007
(73) Patentinhaber: Takata-Petri AG, 63743 Aschaffenburg (DE)
(72) Erfinder: Lube, Thomas, 12589 Berlin (DE); Pradel, Andreas, 10318 Berlin (DE)
(74) Vertreter: Baumgärtel, Gunnar

(56) Entgegenhaltungen:
- DE-A1- 3 435 021
- US-A- 4 598 603

## Beschreibung

Die Erfindung betrifft eine Vorrichtung zur drehbaren Lagerung eines Modulträgers am Lenkrad eines Kraftfahrzeugs gemäß dem Oberbegriff des Anspruchs 1.

Eine solche Vorrichtung dient zur Lagerung eines Modulträgers, insbesondere eines Modulträgers für ein Gassackmodul, an einem um eine Lenkachse drehbaren Lenkrad eines Kraftfahrzeugs derart, dass die Winkellage des Modulträgers bei einer Drehung des Lenkrads um die Lenkachse konstant bleibt, um z.B. im Fall eines Crashs stets eine optimale, reproduzierbare Positionierung eines aufblasbaren, aus dem Gassackmodul heraus entfaltbaren Gassacks zu gewährleisten. Ebenso kann der Modulträger ein Anzeigemodul tragen, dessen Anzeigen aufgrund der konstanten Winkellage des Modulträgers im Raum stets gut lesbar sind.

Üblicherweise umfasst eine solche Vorrichtung einen drehfest mit dem Modulträger verbundenen ersten Zahnkranz, einen Hebel, der über einen Lagerabschnitt des Hebels am Lenkrad zwischen zwei Stellungen hin und her schwenkbar gelagert ist und ein erstes Zahnrad, das beabstandet zum Lagerabschnitt an einem mit dem Lagerabschnitt verbundenen ersten Arm des Hebels drehbar gelagert ist und in einer ersten Stellung des Hebels mit dem ersten Zahnkranz kämmt, wobei elastische Mittel vorgesehen sind, die dazu eingerichtet sind, das erste Zahnrad elastisch gegen den ersten Zahnkranz zu drücken. Das erste Zahnrad wirkt dabei derart mit dem Lenkrad zusammen, dass eine Drehung des Lenkrades in eine Richtung eine Drehung des mit dem ersten Zahnkranz verbundenen Modulträgers in entgegengesetzter Richtung bewirkt, so dass die Winkellage des Modulträgers in einem fahrzeugfesten Koordinatensystem konstant bleibt. Dadurch, dass das erste Zahnrad vermittels des Hebels elastisch gegen den ersten Zahnkranz gedrückt wird, wird ein durch Fertigungstoleranzen und Verspannungen während des Betriebes bedingtes Spiel der vorstehenden Zahnradpaarung ausgeglichen. Eine derartige Vorrichtung ist aus der DE 3435021 bekannt.

Eine weitere Vorrichtung dieser Art mit den Merkmalen des Oberbegriffs des Anspruchs 1 ist aus der US 4729254 bekannt.

Der Erfindung liegt das Problem zugrunde, eine Vorrichtung der eingangs genannten Art derart zu schaffen, dass eine einfache und schnelle Montage der Vorrichtung möglich ist.

Dieses Problem wird durch eine Vorrichtung zur drehbaren Lagerung eines Modulträgers am Lenkrad eines Kraftfahrzeugs mit den Merkmalen des Anspruchs 1 gelöst.

Danach ist vorgesehen, dass der Hebel zum Betätigen des Hebels einen zweiten Arm aufweist, der über den Lagerabschnitt des Hebels mit dem ersten Arm des Hebels verbunden ist.

Über diesen zweiten Arm kann mit Vorteil das am Hebel gelagerte erste Zahnrad bei einer Montage bzw. Demontage in bzw. außer Eingriff mit dem ersten Zahnkranz gebracht werden. Deshalb ist besonders bevorzugt der zweite Arm des Hebels als ein manuell betätigbares Betätigungselement ausgebildet, das dazu vorgesehen und eingerichtet ist, den Hebel manuell aus der ersten Stellung in eine zweite Stellung zu verschwenken (und umgekehrt), wobei sich das erste Zahnrad in der zweiten Stellung außer Eingriff mit dem ersten Zahnkranz befindet. Hierdurch wird die Montage bzw. Demontage der Vorrichtung erheblich vereinfacht.

Bevorzugt ist der zweite Arm an einem freien Ende quer zu einer Erstreckungsrichtung des zweiten Armes, entlang der sich der zweite Arm längs erstreckt, verbreitert ausgebildet. Hierdurch kann mit Vorteil der als Betätigungselement ausgebildete zweite Arm auf einfache Weise mittels einer Fingerspitze, beispielsweise mit dem ersten Fingerglied eines Daumens bzw. mittels eines geeigneten Werkzeugs, betätigt werden.

Bevorzugt ist auch der erste Arm des Hebels, an dem das erste Zahnrad gelagert ist, entlang dieser Erstreckungsrichtung längs erstreckt ausgebildet, d.h., er fluchtet vorzugsweise mit dem zweiten Arm des Hebels. In einer Variante der Erfindung weisen der erste Arm und der zweite Arm entlang der Erstreckungsrichtung betragsmäßig im Wesentlichen die gleiche Länge auf.

Bevorzugt ist ein lösbar am Lenkrad befestigbares Fixierelement vorgesehen, das dazu eingerichtet ist, ein Herausschwenken des Hebels aus der ersten Stellung derart, dass das am ersten Arm des Hebels gelagerte erste Zahnrad den ersten Zahnkranz nicht mehr berührt, zu begrenzen. Vorzugsweise ist das Fixierelement hierbei dazu ausgebildet, das Herausschwenken derart zu begrenzen, dass das erste Zahnrad nicht außer Eingriff mit dem ersten Zahnkranz gerät. Hierzu durchgreift das Fixierelement bevorzugt eine durchgängige Ausnehmung, die an einem freien Endbereich des zweiten Armes ausgebildet ist, wobei der Innendurchmesser der Ausnehmung größer ist als der Außendurchmesser des Fixierelementes im Bereich dieser Ausnehmung. Der Innendurchmesser der Ausnehmung ist dabei um ein solches Maß größer als der Außendurchmesser des Fixierelementes, dass der Hebel um seine erste Stellung herum eine Schwenkbewegung ausführen kann, die dem Spielausgleich der ineinander greifenden Zähne des ersten Zahnkranzes und des ersten Zahnrades dient, wobei der Hebel durch das Fixierelement nicht soweit aus der ersten Stellung herausgeschwenkt werden kann, dass das erste Zahnrad außer Eingriff mit dem ersten Zahnkranz gelangen kann.

Vorzugsweise ist der Hebel schwenkbar an einer Nabe des Lenkrades, über die das Lenkrad um die Lenkachse drehbar am Kraftfahrzeug lagerbar ist, gelagert. Bevorzugt ist der zweite Arm (Betätigungselement) derart ausgebildet bzw. an der Nabe gelagert, dass er entlang der Lenkachse beabstandet zur Nabe freiliegend angeordnet ist. Hierdurch wird mit Vorteil Raum zur manuellen Betätigung des als Betätigungselement ausgebildeten zweiten Armes geschaffen. Allerdings kann der zweite Arm im vollständig montierten Zustand der Vorrichtung durch andere Komponente der Vorrichtung verdeckt oder umhüllt werden.

Vorzugsweise sind die elastischen Mittel derart mit dem Hebel gekoppelt, dass dieser das erste Zahnrad in der ersten Stellung des Hebels elastisch gegen den ersten Zahnkranz drückt. Dabei sind bevorzugt elastische Mittel in Form einer Drehfeder vorgesehen. In einer Variante der Erfindung ist die Drehfeder über einen ersten freien Abschnitt der Drehfeder am Hebel festgelegt und über einen zweiten freien Endabschnitt an der Nabe des Lenkrades. Hierbei ist ein mittlerer Abschnitt der Drehfeder, der die beiden freien Endabschnitte der Drehfeder miteinander verbindet um eine Drehachse gewickelt, um die der Hebel schwenkbar an der Nabe gelagert ist. Bevorzugt verläuft diese Drehachse parallel zur Lenkachse des Lenkrades.

Vorzugsweise ist das erste Zahnrad über eine Welle am ersten Arm des Hebels drehbar gelagert. Hierzu weist der erste Arm bevorzugt eine u-förmige Lagerausnehmung auf, in die die Welle bevorzugt eingeclipst ist. Hierbei umgreift die Lagerausnehmung die Welle im eingeclipsten (oder eingerasteten) Zustand im Querschnitt zumindest abschnittsweise derart, dass die Welle nur durch ein Aufbiegen der Lagerausnehmung, also durch Aufwenden einer Kraft, außer Eingriff mit der Lagerausnehmung gebracht werden kann. Bevorzugt verläuft die Welle parallel zur Lenkachse.

Bevorzugt ist das erste Zahnrad über die Welle mit einem zweiten Zahnrad verbunden. Hierbei kann das erste Zahnrad mit dem zweiten Zahnrad einstückig verbunden sein. Ein derartiges Planetenradpaar kann beispielsweise aus einem thermoplastischen Kunststoff gefertigt sein.

In einer Variante der Erfindung weist die Nabe beabstandet zur Lenkachse eine Aussparung auf, durch die die Welle hindurch geführt ist. Die beiden Zahnräder sind also entlang der Lenkachse zu beiden Seiten der Nabe angeordnet.

Vorzugsweise ist ein zweiter Zahnkranz vorgesehen, der zur drehfesten Lagerung am Kraftfahrzeug ausgebildet ist und mit dem zweiten Zahnrad des Planetenradpaares kämmt. Dieser zweite Zahnkranz kann z. B. an einer Lenksäule bzw. einer Verkleidung der Lenksäule angeordnet sein. Bevorzugt sind die beiden Zahnkränze koaxial zur Lenkachse angeordnet, wobei bevorzugt der Außendurchmesser des zweiten Zahnkranzes betragsmäßig gleich dem Außendurchmesser des ersten Zahnkranzes ist. Weiterhin ist vorgesehen, dass die beiden Zahnkränze die gleiche Zähnezahl aufweisen. Ebenso verfügen die beiden Zahnräder bevorzugt über die gleiche Zähnezahl und weisen einen betragsmäßig gleich großen Außendurchmesser auf.

Das zweite Zahnrad ist dazu eingerichtet und vorgesehen, mit dem zweiten Zahnkranz zu kämmen. Hierbei wirken die elastischen Mittel derart mit dem Hebel zusammen, dass dieser auch das zweite Zahnrad in der ersten Stellung des Hebels elastisch gegen den zweiten Zahnkranz drückt.

Der am Modulträger befestigte erste Zahnkranz und der fahrzeugseitig befestigte zweite Zahnkranz sind über das aus dem ersten Zahnrad und dem zweiten Zahnrad sowie der Welle gebildete Planetenradpaar miteinander gekoppelt, so dass eine Drehung des Lenkrades in eine Richtung eine Drehung des mit dem ersten Zahnkranz verbundenen Modulträgers in entgegengesetzter Richtung bewirkt, und zwar derart, dass die Winkellage des Modulträgers in einem fahrzeugfesten Koordinatensystem konstant bleibt.

Weitere Einzelheiten und Vorteile der Erfindung werden nachfolgend anhand von Beschreibungen von Figuren von Ausführungsbeispielen erläutert.

Es zeigen:
- Fig. 1: eine Explosionsdarstellung einer Vorrichtung zur Lagerung eines Modulträgers an einem drehbaren Lenkrad eines Kraftfahrzeuges,
- Fig. 2: die in der Figur 1 gezeigte Vorrichtung, mit einem Hebel als Träger eines Planetenradpaares, wobei der Hebel in einer zweiten Stellung angeordnet ist, in der sich die Zahnräder des Planetenradpaares außer Eingriff mit den Zahnrädern zugeordneten Zahnkränzen befinden,
- Fig. 3: die in der Figur 2 gezeigte Vorrichtung, wobei der das Planetenradpaar tragende Hebel in einer ersten Stellung angeordnet ist, in der das Planetenradpaar mit den Zahnkränzen kämmt,
- Fig. 4: eine Draufsicht auf die in der Figur 2 gezeigte Vorrichtung, von einer einem Fahrer abgewandten Seite der Vorrichtung her,
- Fig. 5: die in der Figur 4 gezeigte Vorrichtung, wobei die Zahnräder und die Zahnkränze entsprechend der Figur 3 miteinander in Eingriff stehen,
- Fig. 6: eine Abwandlung der in der Figur 1 gezeigten Vorrichtung,
- Fig. 7: eine Explosionsdarstellung eines Teiles der in der Figur 6 gezeigten Vorrichtung,
- Fig. 8: einen Ausschnitt des in den Figuren 6 und 7 dargestellten Hebels, in den eine Welle des Planetenradpaares eingeclipst wird, und
- Fig. 9: eine ausschnitthafte Ansicht des in der Figur 8 gezeigten Hebels, mit eingeclipster Welle des Planetenradpaares.

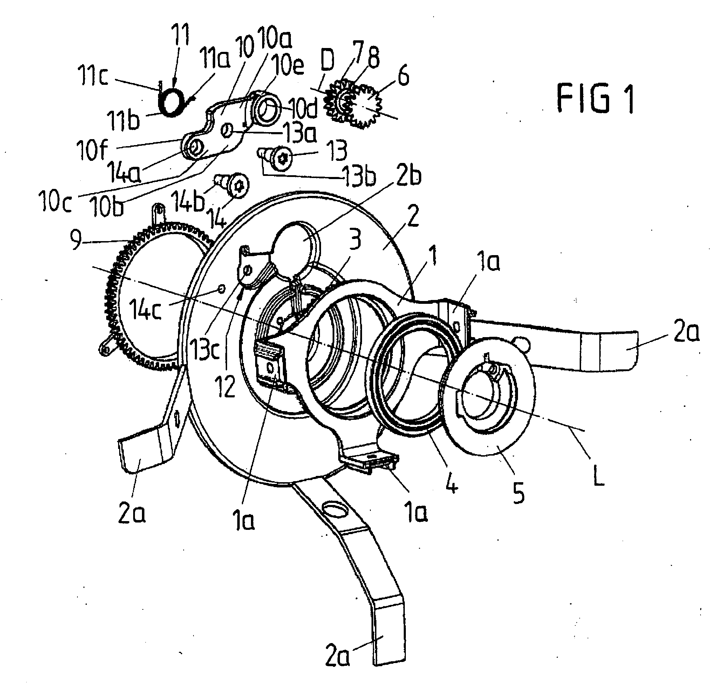

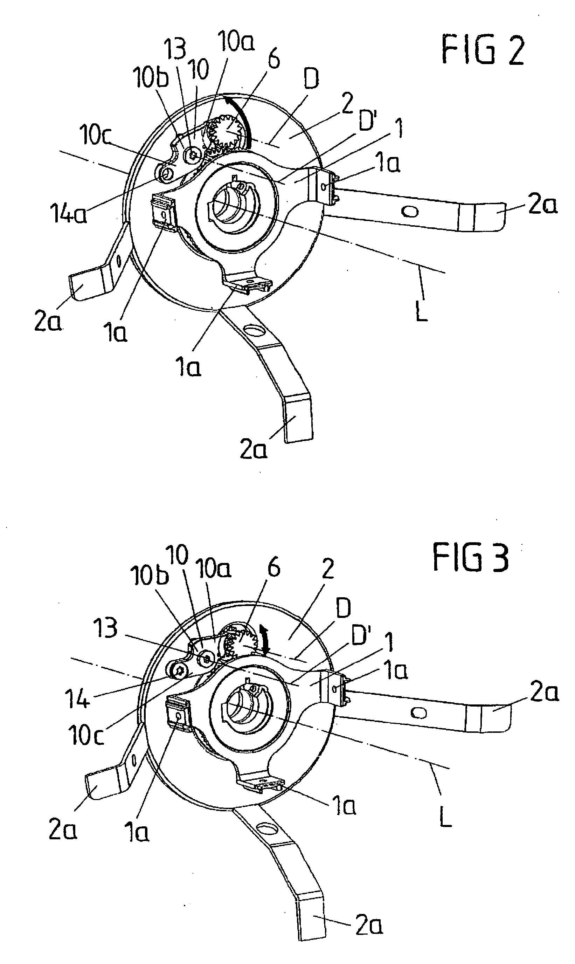

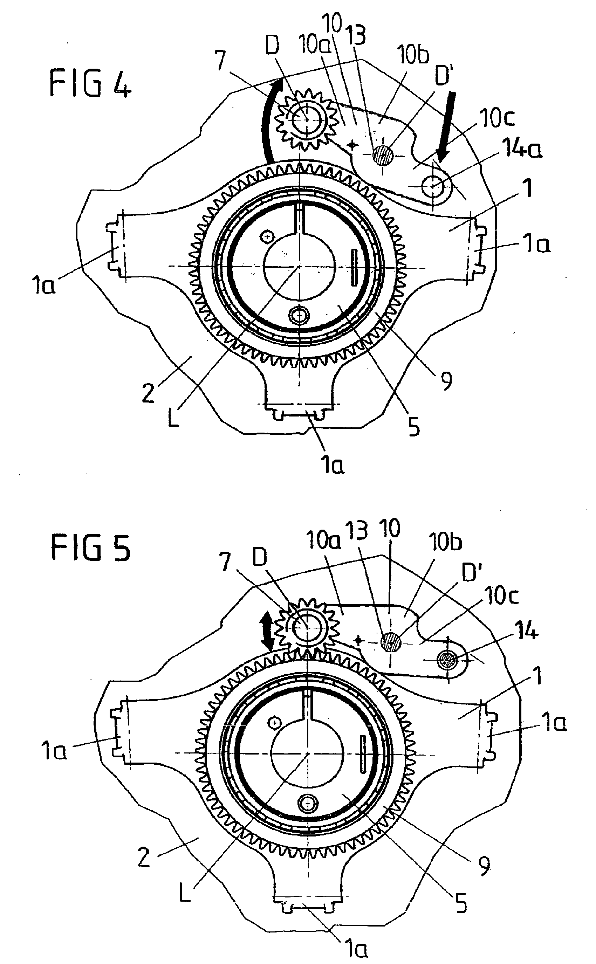

Figur 1 zeigt im Zusammenhang mit Figur 2 bis 5 eine Vorrichtung zur Lagerung eines Modulträgers 1 an einer Nabe 2 eines Lenkrades, die um eine Lenkachse L drehbar an einem Kraftfahrzeug lagerbar ist. Im Folgenden soll von einem in ein Kraftfahrzeug eingebauten Zustand der Vorrichtung ausgegangen werden. Die Vorrichtung umfasst einen koaxial zur Lenkachse L angeordneten ersten Zahnkranz 3, der drehfest mit einer einem Fahrer abgewandten Seite des Modulträgers 1 verbunden ist. Der Modulträger 1 ist im Wesentlichen ringförmig ausgebildet und umläuft die Lenkachse L quer zu dieser. Zum Befestigen eines Moduls am Modulträger 1 weist der Modulträger 1 drei Befestigungselemente 1a auf, die entlang der Lenkachse L (in Richtung eines Fahrers) vom Modulträger 1 abstehen. Entsprechend seiner ringförmigen Ausbildung weist der Modulträger 1 eine durchgängige Aussparung auf, die mit einer Ausnehmung der Nabe 2 fluchtet, wobei die Aussparung zur Aufnahme eines ringförmig ausgebildeten Kugellagers 4 dient, über das der Modulträger 1 an der Nabe 2 drehbar gelagert ist. Zum Fixieren des Kugellagers 4 ist ein Klemmring 5 vorgesehen, der zum Festlegen des Kugellagers 4 entlang der Lenkachse L über eine nicht dargestellte Verschraubung gegen das Kugellager 4 gedrückt wird.

Die Nabe 2 ist im Wesentlichen flächig ausgebildet und erstreckt sich in einer senkrecht zur Lenkachse L verlaufenden Erstreckungsebene. Von einem äußeren umlaufenden Rand der Nabe 2 stehen drei zueinander entlang des Randes beabstandete Speichensegmente 2a von der Nabe 2 ab, die zusammen mit der Nabe 2 einen Teil eines Lenkradskeletts ausbilden, an das über freie Endbereiche der Speichensegmente 2a ein Lenkradkranzskelett bzw. ein Lenkradkranz befestigt werden kann. Die Nabe 2 weist eine entlang der Lenkachse L durchgängige Aussparung 2b auf, die quer zur Lenkachse L von dieser beabstandet ist, und zwar derart, dass die Beabstandung zwischen der Lenkachse L und einem Zentrum der Aussparung 2b größer ist als ein Außenradius des ersten Zahnkranzes 3 in Bezug auf die Lenkachse L. In die Aussparung 2b ist ein Planetenradpaar eingeführt, das ein erstes Zahnrad 6 und ein weiteres, parallel zum Zahnrad 6 angeordnetes zweites Zahnrad 7 aufweist, die über eine entlang der Lenkachse L verlaufende Welle 8 miteinander verbunden sind. Das Planetenradpaar ist derart in der Aussparung 2b der Nabe 2 angeordnet, dass das erste Zahnrad 6 des Planetenradpaars sich in Eingriff mit dem ersten Zahnkranz 3 befindet, der an der der Nabe 2 zugewandten Seite des Modulträgers 1 festgelegt ist. Hierbei ist die Nabe 2 entlang der Lenkachse L von einem Fahrer aus betrachtet hinter dem ersten Zahnrad 6 angeordnet, und das über die Welle 8 mit dem ersten Zahnrad 6 verbundene zweite Zahnrad 7 ist entlang der Lenkachse L von einem Fahrer aus betrachtet hinter der Nabe 2 angeordnet und befindet sich im Eingriff mit einem zweiten Zahnkranz 9, der drehfest mit dem Kraftfahrzeug, beispielsweise der Lenksäule, verbunden ist. Oder anders gesagt, die Nabe 2 ist derart drehbar am Kraftfahrzeug gelagert, dass sie entlang der Lenkachse L zwischen dem modulträgerfesten ersten Zahnkranz 3 und dem fahrzeugfesten zweiten Zahnkranz 9 angeordnet ist. Die beiden Zahnkränze (Sonnenräder) 3, 9 sind über das Planetenradpaar miteinander gekoppelt, dessen Welle 8 entlang der Lenkachse L durch die Aussparung 2b der Nabe 2 hindurch verläuft.

Betragsmäßig sind die Außendurchmesser des ersten Zahnkranzes 3 und des zweiten Zahnkranzes 9 sowie deren Zähnezahl gleich. Dies gilt auch für die beiden Zahnräder 6, 7 des Planetenradpaars. Das Planetenradpaar ist über die die beiden Zahnräder 6, 7 miteinander verbindende Welle 8 mittels eines Hebels 10 an der Nabe 2 gelagert, so dass das erste und das zweite Zahnrad 6, 7 des Planetenradpaares um eine parallel zur Lenkachse L verlaufende Drehachse D, die mit der Welle 8 fluchtet, drehbar sind.

Der Hebel 10 dient dazu, das erste Zahnrad 6 und das zweite Zahnrad 7 zum Kämmen mit dem ersten Zahnkranz 3 bzw. dem zweiten Zahnkranz 9 elastisch gegen diese beiden Zahnkränze 3, 9 zu drücken. Hierdurch wird ein Spiel zwischen den Zahnradpaarungen erstes Zahnrad 6 / erster Zahnkranz 3 einerseits und zweites Zahnrad 7 / zweiter Zahnkranz 9 andererseits ausgeglichen. Der Hebel 10 ist zweiarmig ausgebildet und weist dementsprechend einen ersten Arm 10a mit einem freien Endbereich 10e auf, an dem eine durchgängige Lageraussparung 10d ausgebildet ist, in der die Welle 8 um die Drehachse D drehbar gelagert ist. Der erste Arm 10a des Hebels 10 ist über einen Lagerabschnitt 10b des Hebels 10, über den der Hebel 10 an der Nabe 2 um eine parallel zur Lenkachse L verlaufende Drehachse D' schwenkbar gelagert ist, mit einem zweiten Arm 10c verbunden, der entgegengesetzt zum ersten Arm 10a vom Lagerabschnitt 10b des Hebels 10 absteht.

Die Kraft, mittels der der erste Arm 10a des Hebels 10 entlang einer senkrecht auf der Lenkachse L stehenden Richtung das Planetenradpaar mit den beiden Zahnrädern 6, 7 gegen die beiden Zahnkränze 3, 9 drückt, wird durch eine Drehfeder 11 bereitgestellt. Die Drehfeder 11 weist einen ersten freien Endabschnitt 11a auf, über den sie am Hebel 10 befestigt ist und der über einen mittleren Abschnitt 11 b der Drehfeder 11 mit einem zweiten freien Endabschnitt 11 c der Drehfeder 11 verbunden ist, über den die Drehfeder 11 an der Nabe 2 festgelegt ist. Hierzu weist die Nabe 2 eine Ausnehmung 12 zur Aufnahme sowohl des mittleren Abschnitts 11 b als auch des zweiten freien Endabschnitts 11a der Drehfeder 11 auf. Der Hebel 10 ist über seinen Lagerabschnitt 10b mittels eines mit der Drehachse D' fluchtenden Bolzens 13 schwenkbar an der Nabe 2 gelagert. Hierzu durchgreift der Bolzen 13 eine Aussparung 13a des Lagerbereiches 10b und ist mit einem freien Endbereich 13b in einer in der Ausnehmung 12 der Nabe 2 ausgebildeten Aussparung 13c festgelegt. Der Bolzen 13 kann beispielsweise als eine Schraube ausgebildet sein, die mit ihrem ein Gewinde aufweisenden freien Endbereich 13b in die Aussparung 13c eingeschraubt ist. Der mittlere Abschnitt 11 b der Drehfeder 11 ist entlang der Drehachse D' des Hebels 10 zwischen dem Hebel 10 und der Nabe 2 um den Bolzen 13, d.h., um die Drehachse D', gewickelt.

Der vom Lagerabschnitt 10b abgehende zweite Arm 10c des Hebels 10 ist als ein manuell betätigbares Betätigungselement ausgebildet, über das der Hebel 10 entgegen der durch die Drehfeder 11 bereitgestellten Kraft in eine zweite Stellung verschwenkt werden kann, in der das Planetenradpaar außer Eingriff mit den beiden Zahnkränzen 3, 9 ist. Hierzu wird das Betätigungselement 10c entlang einer senkrecht auf der Lenkachse L stehenden Richtung zum ersten Zahnkranz 3 hin gedrückt. Diese zweite Stellung des Hebels 10 entspricht einer Montageposition, in der die Vorrichtung leicht montiert bzw. demontiert werden kann. Insbesondere können in dieser zweiten Stellung des Hebels 10 die Nabe 2 sowie der Modulträger 1 besonders einfach in ihren bestimmungsgemäßen Positionen angeordnet werden, da das Planetenradpaar in der zweiten Stellung des Hebels 10 das Positionieren dieser Komponenten der Vorrichtung bezüglich des zweiten Zahnkranzes 9 bzw. der Nabe 2 (im Falles des Modulträgers 1) nicht behindert.

Das Betätigungselement 10c ist mittels eines als Bolzen ausgebildeten Fixierelementes 14 fixierbar, der hierzu in eine durchgängige Aussparung 14a eines freien Endbereiches 10f des Betätigungselementes 10c eingreift und mit einem freien Endbereich 14b in einer Aussparung 14c der Nabe 2 lösbar festgelegt ist (beispielsweise durch ein Verschrauben mit der Aussparung 14c). Die Fixierung des Betätigungselementes 10c mittels des Bolzens 14 erfolgt in der ersten Stellung des Hebels 10, und zwar derart, dass der Hebel 10 im fixierten Zustand eine Schwenkbewegung um seine Drehachse D' ausführen kann, die derart durch den Bolzen 14 begrenzt wird, dass das am ersten Arm 10a des Hebels 10 gelagerte erste Zahnrad 6 sowie das dort gelagerte zweite Zahnrad 7 gerade nicht außer Eingriff mit dem ersten Zahnkranz 3 bzw. dem zweiten Zahnkranz 9 gelangen können.

Aufgrund der Kopplung des ersten Zahnkranzes 3 mit dem fahrzeugfesten zweiten Zahnkranz 9 über die beiden miteinander (über die Welle 8) verbundenen Zahnräder 6, 7, ergibt sich folgende Funktion der vorstehend beschriebenen Vorrichtung. Bei einer Drehung der Nabe 2 um die Lenkachse L wird die durch die Ausnehmung 2b der Nabe 2 geführte Welle 8 in Drehrichtung mitgenommen und das zweite Zahnrad 7 des Planetenradpaars rollt auf dem fahrzeugfesten zweiten Zahnkranz 9 ab. Die hierdurch erzeugte Drehbewegung der Welle 8 um ihre Drehachse D wird mittels des ersten Zahnrades 6 des Planetenradpaars, das eine zur Drehbewegung des zweiten Zahnrades 7 identische (richtungsgleiche) Bewegung ausführt, auf den ersten Zahnkranz 3 derart übertragen, dass die Drehbewegung des ersten Zahnkranzes 3 zur Drehbewegung der beiden Zahnräder 6, 7 und damit auch des Lenkrades bzw. der Nabe 2 gegenläufig ist (Umkehrgetriebe). Hierdurch wird der mit dem ersten Zahnkranz 3 verbundene Modulträger 1 relativ zur Nabe 2 (Lenkrad) in entgegengesetzter Richtung gedreht.

Hierbei sind die beiden Zahnräder 6, 7 sowie die beiden Zahnkränze 3, 9 hinsichtlich ihrer Zähnezahl und Abmessungen derart ausgebildet, dass der Drehwinkel des Lenkrades bzw. der Nabe 2 in Bezug auf den zweiten Zahnkranz 9 betragsmäßig im Wesentlichen identisch ist mit dem Drehwinkel des Modulträgers 1 in entgegengesetzter Richtung. Eine Drehung der Nabe 2 in eine Richtung bewirkt somit eine Drehung des an der Nabe 2 gelagerten Modulträgers 1 relativ zur Nabe 2 in die entgegengesetzte Richtung, und zwar um denselben Drehwinkel, so dass die Winkellage des drehbar an der Nabe 2 gelagerten Modulträgers 1 in einem fahrzeugfesten Koordinatensystem konstant bleibt.

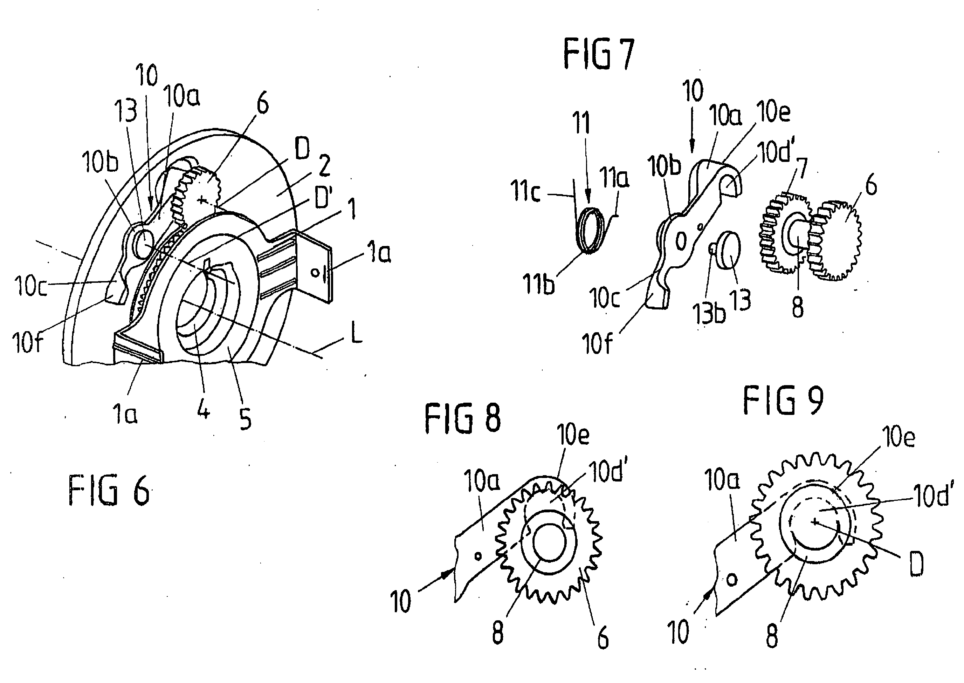

Figur 6 zeigt eine Abwandlung der in den Figuren 1 bis 5 gezeigten Vorrichtung zur Lagerung eines Modulträgers 1 an einem Lenkrad. Hierbei ist im Unterschied zu den Figuren 1 bis 5 kein Fixierelement 14 in Form eines Bolzens zum Feststellen des Hebels 10 in einer ersten Stellung, in der das am Hebel 10 gelagerte Planetenradpaar (über die Welle 8 miteinander verbundene Zahnräder 6, 7) mit dem ersten Zahnkranz 3 bzw. dem zweiten Zahnkranz 9 kämmt. Der Hebel 10 wird lediglich durch die mittels des elastischen Mittels 11 auf den Hebel 10 ausgeübte Kraft in der ersten Stellung gehalten, in der die am ersten Arm 10a des Hebels 10 gelagerten Zahnräder 6, 7 zum Kämmen mit den beiden Zahnkränzen 3, 9 gegen diese gedrückt werden. Der zweite Arm 10c des Hebels 10, der als ein Betätigungselement ausgeformt ist, weist ergonomisch vorteilhaft an einem freien Endbereich 10f eine Verbreiterung auf, die zum Betätigen des Betätigungselementes 10c per Fingerdruck eingerichtet und vorgesehen ist. Zum Befördern des Hebels 10 in seine zweite Stellung, in der die Zahnräder 6, 7 außer Eingriff mit den Zahnkränzen 3, 9 sind, wird der verbreiterte Endbereich 10f des Betätigungselementes 10c des Hebels 10 per Fingerdruck mit einer Kraft beaufschlagt, die entlang einer senkrecht auf der Lenkachse L stehenden Richtung auf die Lenkachse L gerichtet ist, so dass sich der erste Arm 10a des Hebels 10 vom ersten Zahnkranz 3 (und vom zweiten Zahnkranz 9) derart abhebt, dass die am ersten Arm 10a gelagerten Zahnräder 6, 7 außer Eingriff mit den beiden Zahnkränzen 3, 9 gelangen.

Figur 7 zeigt eine Explosionsdarstellung des Hebels 10 der Figur 6, mit dem als Drehfeder 11 ausgebildeten elastischen Mittel (Federmittel), dem Bolzen 13 zur schwenkbaren Lagerung des Hebels 10 um die Drehachse D', und dem einstückig geformten Planetenradpaar, bestehend aus dem ersten Zahnrad 6 und dem zweiten Zahnrad 7, die über die zylindrische Welle 8 miteinander verbunden sind. Zur Lagerung der Welle 8 am ersten Arm 10a des Hebels 10 weist der erste Arm 10a an seinem freien Ende 10e eine u-förmige, dem ersten Zahnkranz 3 zugewandte Lagerausnehmung 10d' auf, in die die Welle 8 des Planetenradpaares gemäß der Figur 8 und Figur 9 eingeclipst wird, so dass die Welle 8 derart durch den ersten Arm 10a des Hebels 10 umgriffen wird, dass diese in der Lagerausnehmung 10d' um die Drehachse D drehbar festgelegt ist.

## Patentansprüche

1. Vorrichtung zur Lagerung eines Modulträgers (1) an einem drehbaren Lenkrad eines Kraftfahrzeuges derart, dass die Winkellage des Modulträgers (1) bei einer Drehung des Lenkrades konstant bleibt, mit
- einem drehfest mit dem Modulträger (1) verbundenen ersten Zahnkranz (3);
- einem Hebel (10), der über einen Lagerabschnitt (106) zwischen zwei Stellungen hin und her schwenkbar am Lenkrad gelagert ist,
- einem ersten Zahnrad (6) das an einem ersten Arm (10a) des Hebels (10) drehbar gelagert ist und in einer ersten Stellung des Hebels (10) mit dem ersten Zahnkranz (3) kämmt, und
- elastischen Mitteln (11); die dazu eingerichtet und vorgesehen sind, das erste Zahnrad (6) elastisch gegen den ersten Zahnkranz (3) zu drücken, wobei das erste Zahnrad (6) derart mit dem Lenkrad zusammenwirkt, dass eine Drehung des Lenkrades in eine Richtung eine Drehung des mit dem ersten Zahnkranz (3) verbundenen Modulträgers (1) in entgegengesetzter Richtung bewirkt, so dass die Winkellage des Modulträgers (1) konstant bleibt,
**dadurch gekennzeichnet,**
**dass** der Hebel (10) zum Betätigen des Hebels (10) einen zweiten Arm (10c) aufweist, der über den Lagerabschnitt (10b) mit dem ersten Arm (10a) des Hebels (10) verbunden ist.

2. Vorrichtung nach Anspruch 1, **dadurch gekennzeichnet, dass** der zweite Arm (10c) des Hebels (10) als ein Betätigungselement ausgebildet ist, mit dem der Hebel (10) manuell aus der ersten Stellung in eine zweite Stellung verschwenkbar ist, in der das erste Zahnrad (6) außer Eingriff mit dem ersten Zahnkranz (3) ist.

3. Vorrichtung nach Anspruch 1 oder 2, **dadurch gekennzeichnet, dass** der zweite Arm (10c) an einem freien Ende (10f) verbreitert ausgebildet ist.

4. Vorrichtung nach einem der vorangegangenen Ansprüche, **dadurch gekennzeichnet, dass** der zweite Arm (10c) des Hebels (10) entlang einer Erstreckungsrichtung längs erstreckt ausgebildet ist.

5. Vorrichtung nach Anspruch 4, **dadurch gekennzeichnet, dass** der erste Arm (10a) entlang der Erstreckungsrichtung längs erstreckt ausgebildet ist.

6. Vorrichtung nach Anspruch 4 oder 5, **dadurch gekennzeichnet, dass** der erste Arm (10a) und der zweite Arm (10c) entlang der Erstreckungsrichtung betragsmäßig im Wesentlichen die gleiche Länge aufweisen.

7. Vorrichtung nach einem der vorangegangenen Ansprüche, **dadurch gekennzeichnet, dass** ein lösbar am Lenkrad festlegbares Fixierelement (14) vorgesehen ist, das dazu eingerichtet ist, ein Herausschwenken des Hebels (10) aus der ersten Stellung zu begrenzen.

8. Vorrichtung nach Anspruch 7, **dadurch gekennzeichnet, dass** das Fixierelement (14) dazu ausgebildet ist, das Herausschwenken derart zu begrenzen, dass das erste Zahnrad (6) nicht außer Eingriff mit dem ersten Zahnkranz (3) gelangen kann.

9. Vorrichtung nach Anspruch 7 oder 8, **dadurch gekennzeichnet, dass** das Fixierelement (14) zum Begrenzen des Herausschwenkens eine durchgängige Ausnehmung (14a) eines freien Endbereichs (10f) des zweiten Armes (10c) durchgreift.

10. Vorrichtung nach Anspruch 9, **dadurch gekennzeichnet, dass** ein Innendurchmesser der Ausnehmung (14a) größer ist als ein Außendurchmesser des Fixierelementes (14) innerhalb der Ausnehmung (14a).

11. Vorrichtung nach einem der vorangegangenen Ansprüche, **gekennzeichnet durch** eine Nabe (2) des Lenkrades, über die das Lenkrad um eine Lenkachse (L) schwenkbar am Kraftfahrzeug lagerbar ist und an der der Hebel (10) schwenkbar gelagert ist.

12. Vorrichtung nach Anspruch 11, **dadurch gekennzeichnet, dass** der zweite Arm (10c) entlang der Lenkachse (L) beabstandet zur Nabe (2) angeordnet ist.

13. Vorrichtung nach einem der vorangegangenen Ansprüche, **dadurch gekennzeichnet, dass** die elastischen Mittel (11) derart mit dem Hebel (10) zusammenwirken, dass dieser das erste Zahnrad (6) in der ersten Stellung des Hebels (10) elastisch gegen den ersten Zahnkranz (3) drückt.

14. Vorrichtung nach einem der vorangegangenen Ansprüche, **gekennzeichnet durch** elastische Mittel in Form eine Drehfeder (11).

15. Vorrichtung nach Anspruch 11 und Anspruch 14, **dadurch gekennzeichnet, dass** die Drehfeder (11) einen ersten freien Endabschnitt (11a) aufweist, über den sie am Hebel (10) festgelegt ist, und dass die Drehfeder (11) einen zweiten freien Endabschnitt (11c) aufweist, über den sie an der Nabe (2) festgelegt ist.

16. Vorrichtung nach Anspruch 11 oder einem der Ansprüche 12 bis 15 soweit rückbezogen auf Anspruch 11, **dadurch gekennzeichnet, dass** der Hebel (10) um eine Drehachse (D') schwenkbar an der Nabe (2) gelagert ist, und dass die Drehachse (D') parallel zur Lenkachse (L) verläuft.

17. Vorrichtung nach Anspruch 15 und 16, **dadurch gekennzeichnet, dass** die Drehfeder (11) einen mittleren Abschnitt (11b) aufweist, der die beiden freien Endabschnitte (11a, 11c) der Drehfeder (11) miteinander verbindet und dabei die Drehachse (D') umläuft.

18. Vorrichtung nach einem der vorangegangenen Ansprüche, **dadurch gekennzeichnet, dass** das erste Zahnrad (6) über eine Welle (8) an einem freien Endbereich (10e) des ersten Armes (10a) des Hebels (10) drehbar gelagert ist.

19. Vorrichtung nach Anspruch 18, **dadurch gekennzeichnet, dass** der erste Arm (10a) an seinem freien Endbereich (10e) eine u-förmige Lagerausnehmung (10d') zur Lagerung der Welle (8) aufweist.

20. Vorrichtung nach Anspruch 18 oder 19, **dadurch gekennzeichnet, dass** die Welle (8) in die Lagerausnehmung (10d') eingeclipst ist.

21. Vorrichtung nach Anspruch 11 oder 12 und einem der Ansprüche 18 bis 20, **dadurch gekennzeichnet, dass** sich die Welle (8) entlang der Lenkachse (L) erstreckt.

22. Vorrichtung nach einem der Ansprüche 18 bis 21, **dadurch gekennzeichnet, dass** das erste Zahnrad (6) über die Welle (8) mit einem zweiten Zahnrad (7) gekoppelt ist.

23. Vorrichtung nach Anspruch 22, **dadurch gekennzeichnet, dass** das erste Zahnrad (6) und das zweite Zahnrad (7) die gleiche Zähnezahl aufweisen.

24. Vorrichtung nach Anspruch 22 oder 23, **dadurch gekennzeichnet, dass** der Außendurchmesser des ersten Zahnrades (6) betragsmäßig gleich dem Außendurchmesser des zweiten Zahnrades (7) ist.

25. Vorrichtung nach Anspruch 11 oder 12 und einem der Ansprüche 18 bis 24, **dadurch gekennzeichnet, dass** die Welle (8) durch eine Aussparung (2b) der Nabe (2) geführt ist.

26. Vorrichtung nach einem der vorangegangenen Ansprüche, **gekennzeichnet durch** einen zweiten Zahnkranz (9), der zur drehfesten Lagerung am Kraftfahrzeug eingerichtet und vorgesehen ist.

27. Vorrichtung nach Anspruch 11 oder 12 und Anspruch 26, **dadurch gekennzeichnet, dass** der erste Zahnkranz (3) koaxial zur Lenkachse (L) angeordnet ist, und dass der zweite Zahnkranz (9) koaxial zur Lenkachse (L) angeordnet ist.

28. Vorrichtung nach Anspruch 26 oder 27, **dadurch gekennzeichnet, dass** der Außendurchmesser des zweiten Zahnkranzes (9) betragsmäßig gleich dem Außendurchmesser des ersten Zahnkranzes (3) ist.

29. Vorrichtung nach einem der Ansprüche 26 bis 28, **dadurch gekennzeichnet, dass** der erste Zahnkranz (3) und der zweite Zahnkranz (9) die gleiche Zähnezahl aufweisen.

30. Vorrichtung nach Anspruch 22 und einem der Ansprüche 26 bis 29, **dadurch gekennzeichnet, dass** das zweite Zahnrad (7) mit dem zweiten Zahnkranz (9) kämmt.

31. Vorrichtung nach einem der Ansprüche 22 bis 24 und einem der Ansprüche 26 bis 30, **dadurch gekennzeichnet, dass** die elastischen Mittel (11) derart mit dem Hebel (10) zusammenwirken, dass dieser das zweite Zahnrad (7) in der ersten Stellung des Hebels (10) elastisch gegen den zweiten Zahnkranz (9) drückt.

## Claims

1. Device for mounting a module carrier (1) on a rotatable steering wheel of a motor vehicle in such a manner that the angular position of the module carrier (1) remains constant during a rotation of the steering wheel, with
- a first toothed ring (3) connected in a rotationally fixed manner to the module carrier (1),
- a lever (10), which is mounted on the steering wheel via a bearing section (10b) in a manner such that it can pivot to and fro between two positions,
- a first toothed wheel (6), which is mounted rotatably on a first arm (10a) of the lever (10) and meshes with the first toothed ring (3) in a first position of the lever (10), and
- elastic means (11), which are arranged and provided in order to press the first toothed wheel (6) elastically against the first toothed ring (3), the first toothed wheel (6) interacting with the steering wheel in such a manner that a rotation of the steering wheel in one direction causes a rotation of the module carrier (1), which is connected to the first toothed ring (3), in the opposite direction, and therefore the angular position of the module carrier (1) remains constant,
**characterized in that,** to actuate the lever (10), the lever (10) has a second arm (10c) which is connected via the bearing section (10b) to the first arm (10a) of the lever (10).

2. Device according to Claim 1, **characterized in that** the second arm (10c) of the lever (10) is designed as an actuating element with which the lever (10) can be pivoted manually from the first position into a second position, in which the first toothed wheel (6) is disengaged from the first toothed ring (3).

3. Device according to Claim 1 or 2, **characterized in that** the second arm (10c) is of widened design at a free end (10f).

4. Device according to one of the preceding claims, **characterized in that** the second arm (10c) of the lever (10) is designed such that it extends longitudinally along a direction of extent.

5. Device according to Claim 4, **characterized in that** the first arm (10a) is designed such that it extends longitudinally along the direction of extent.

6. Device according to Claim 4 or 5, **characterized in that** the first arm (10a) and the second arm (10c) are essentially identical in terms of length along the direction of extent.

7. Device according to one of the preceding claims, **characterized in that** a fixing element (14) which can be fixed releasably to the steering wheel is provided and is arranged in order to limit a pivoting of the lever (10) out of the first position.

8. Device according to Claim 7, **characterized in that** the fixing element (14) is designed in order to limit the pivoting out in such a manner that the first toothed wheel (6) cannot be disengaged from the first toothed ring (3).

9. Device according to Claim 7 or 8, **characterized in that** the fixing element (14) for limiting the pivoting out reaches through a continuous recess (14a) of a free end region (10f) of the second arm (10c).

10. Device according to Claim 9, **characterized in that** an inside diameter of the recess (14a) is larger than an outside diameter of the fixing element (14) within the recess (14a).

11. Device according to one of the preceding claims, **characterized by** a hub (2) of the steering wheel, via which the steering wheel can be mounted on the motor vehicle in a manner such that it can pivot about a steering axis (L) and on which the lever (10) is pivotably mounted.

12. Device according to Claim 11, **characterized in that** the second arm (10c) is arranged along the steering axis (L) at a distance from the hub (2).

13. Device according to one of the preceding claims, **characterized in that** the elastic means (11) interact with the lever (10) in such a manner that the latter presses the first toothed wheel (6) elastically against the first toothed ring (3) in the first position of the lever (10).

14. Device according to one of the preceding claims, **characterized by** elastic means in the form of a torsion spring (11).

15. Device according to Claim 11 and Claim 14, **characterized in that** the torsion spring (11) has a first free end section (11a), via which it is fixed on the lever (10), and **in that** the torsion spring (11) has a second free end section (11c), via which it is fixed on the hub (2).

16. Device according to Claim 11 or one of Claims 12 to 15, if referred back to Claim 11, **characterized in that** the lever (10) is mounted on the hub (2) in a manner such that it can pivot about an axis of rotation (D'), and **in that** the axis of rotation (D') runs parallel to the steering axis (L).

17. Device according to Claims 15 and 16, **characterized in that** the torsion spring (11) has a central section (11b) which connects the two free end sections (11a, 11c) of the torsion spring (11) to each other and in the process encircles the axis of rotation (D').

18. Device according to one of the preceding claims, **characterized in that** the first toothed wheel (6) is mounted rotatably on a free end region (10e) of the first arm (10a) of the lever (10) via a shaft (8).

19. Device according to Claim 18, **characterized in that** the first arm (10a) has a U-shaped bearing recess (10d') on its free end region (10e) for the mounting of the shaft (8).

20. Device according to Claim 18 or 19, **characterized in that** the shaft (8) is clipped into the bearing recess (10d').

21. Device according to Claim 11 or 12 and one of Claims 18 to 20, **characterized in that** the shaft (8) extends along the steering axis (L).

22. Device according to one of Claims 18 to 21, **characterized in that** the first toothed wheel (6) is coupled to a second toothed wheel (7) via the shaft (8).

23. Device according to Claim 22, **characterized in that** the first toothed wheel (6) and the second toothed wheel (7) have the same number of teeth.

24. Device according to Claim 22 or 23, **characterized in that** the outside diameter of the first toothed wheel (6) is identical in size to the outside diameter of the second toothed wheel (7).

25. Device according to Claim 11 or 12 and one of Claims 18 to 24, **characterized in that** the shaft (8) is guided through a cutout (2b) in the hub (2).

26. Device according to one of the preceding claims, **characterized by** a second toothed ring (9) which is arranged and provided for the rotationally fixed mounting on the motor vehicle.

27. Device according to Claim 11 or 12 and Claim 26, **characterized in that** the first toothed ring (3) is arranged coaxially with the steering axis (L), and the second toothed ring (9) is arranged coaxially with the steering axis (L).

28. Device according to Claim 26 or 27, **characterized in that** the outside diameter of the second toothed ring (9) is identical in size to the outside diameter of the first toothed ring (3).

29. Device according to one of Claims 26 to 28, **characterized in that** the first toothed ring (3) and the second toothed ring (9) has the same number of teeth.

30. Device according to Claim 22 and one of Claims 26 to 29, **characterized in that** the second toothed wheel (7) meshes with the second toothed ring (9).

31. Device according to one of Claims 22 to 24 and one of Claims 26 to 30, **characterized in that** the elastic means (11) interact with the lever (10) in such a manner that the latter presses the second toothed wheel (7) elastically against the second toothed ring (9) in the first position of the lever (10).

## Revendications

1. Dispositif pour le montage d'un porte-module (1) sur un volant de direction rotatif d'un véhicule automobile, de telle manière que la position angulaire du porte-module (1) reste constante lors d'une rotation du volant, comprenant :
- une première couronne dentée (3) reliée solidairement en rotation au porte-module (1),
- un levier (10) qui est monté, via un tronçon de montage (10b), en pivotement sur le volant en va-et-vient entre deux positions,
- un premier engrenage (6), qui est monté en rotation sur un premier bras (10a) du levier (10) et qui, dans une première position du levier (10), engrène avec la première couronne dentée (3), et
- des organes élastiques (11), qui sont conçus et prévus pour pousser élastiquement le premier engrenage (6) contre la première couronne dentée (3), ledit premier engrenage (6) coopérant avec le volant de telle façon qu'une rotation du volant dans une direction provoque une rotation du porte-module (1), relié à la première couronne dentée (3), dans la direction opposée, de sorte que la position angulaire du porte-module (1) reste constante,
**caractérisé en ce que** le levier (10) comprend, pour l'actionnement du levier (10), un second bras (10c) qui est relié au premier bras (10a) du levier (10) via le tronçon de montage (10b).

2. Dispositif selon la revendication 1, **caractérisé en ce que** le second bras (10c) du levier (10) est réalisé comme un élément d'actionnement au moyen duquel le levier (10) peut être pivoté manuellement de la première position dans une seconde position dans laquelle le premier engrenage (6) est dégagé par rapport à la première couronne dentée (3).

3. Dispositif selon la revendication 1 ou 2, **caractérisé en ce que** le second bras (10c) est réalisé élargi à une extrémité libre (10f).

4. Dispositif selon l'une quelconque des revendications précédentes, **caractérisé en ce que** le second bras (10c) du levier (10) est réalisé de manière à s'étendre le long d'une direction d'extension.

5. Dispositif selon la revendication 4, **caractérisé en ce que** le premier bras (10a) est réalisé de manière à s'étendre le long de la direction d'extension.

6. Dispositif selon la revendication 4 ou 5, **caractérisé en ce que** le premier bras (10a) et le second bras (10c) présentent, le long de la direction d'extension, sensiblement la même longueur en termes de valeur.

7. Dispositif selon l'une des revendications précédentes, **caractérisé en ce qu'**il est prévu un élément de fixation (14), susceptible d'être fixé sur le volant et conçu pour limiter un pivotement du levier (10) hors de la première position.

8. Dispositif selon la revendication 7, **caractérisé en ce que** l'élément de fixation (14) est réalisé pour limiter le pivotement de telle sorte que le premier engrenage (6) ne peut pas parvenir hors de l'engagement avec la première couronne dentée (3).

9. Dispositif selon la revendication 7 ou 8, **caractérisé en ce que,** pour limiter le pivotement, l'élément de fixation (14), traverse un évidement traversant (14a) d'une zone terminale libre (10f) du second bras (10c).

10. Dispositif selon la revendication 9, **caractérisé en ce qu'**un diamètre intérieur de l'évidement (14a) est supérieur à un diamètre extérieur de l'élément de fixation (14) à l'intérieur de l'évidement (14a).

11. Dispositif selon l'une quelconque des revendications précédentes, **caractérisé en ce que** le volant possède un moyeu (2), au moyen duquel le volant peut être monté sur le véhicule en pivotement autour d'un axe de direction (L), et sur lequel le levier (10) est monté en pivotement.

12. Dispositif selon la revendication 11, **caractérisé en ce que** le second bras (10c) est agencé à distance du moyeu (2) le long de l'axe de direction (L).

13. Dispositif selon l'une quelconque des revendications précédentes, **caractérisé en ce que** les organes élastiques (11) coopèrent avec le levier (10) de telle façon que celui-ci presse le premier engrenage (6) élastiquement contre la première couronne dentée (3) dans la première position du levier (10).

14. Dispositif selon l'une quelconque des revendications précédentes, **caractérisé par** des organes élastiques sous la forme d'un ressort rotatif (11).

15. Dispositif selon la revendication 11 et la revendication 14, **caractérisé en ce que** le ressort rotatif (11) comprend un premier tronçon terminal libre, via lequel il est immobilisé sur le levier (10), et **en ce que** le ressort rotatif (11) comprend un second tronçon terminal libre (11c) via lequel il est immobilisé sur le moyeu (2).

16. Dispositif selon la revendication 11, ou selon l'une des revendications 12 à 15 prise en dépendance de la revendication 11, **caractérisé en ce que** le levier (10) est monté sur le moyeu (2) en pivotement autour d'un axe de rotation (D'), et **en ce que** l'axe de rotation (D') s'étend parallèlement à l'axe de direction (L).

17. Dispositif selon la revendication 15 et 16, **caractérisé en ce que** le ressort rotatif (11) comprend un tronçon médian (11b) qui relie les deux tronçons terminaux (11a, 11c) du ressort rotatif (11) l'un à l'autre et qui entoure de fait l'axe de rotation (D').

18. Dispositif selon l'une des revendications précédentes, **caractérisé en ce que** le premier engrenage (6) est monté en rotation via un arbre (8) à une zone terminale libre (10e) du premier bras (10a) du levier (10).

19. Dispositif selon la revendication 18, **caractérisé en ce que** le premier bras (10a) comporte, dans sa zone terminale libre (10e), un évidement de montage en forme de U (10d') pour le montage de l'arbre (8).

20. Dispositif selon la revendication 18 ou 19, **caractérisé en ce que** l'arbre (8) est clipsé dans l'évidement de montage (10d').

21. Dispositif selon la revendication 11 ou 12 et l'une des revendications 18 à 20, **caractérisé en ce que** l'arbre (8) s'étend le long de l'axe de direction (L).

22. Dispositif selon l'une des revendications 18 à 21, **caractérisé en ce que** le premier engrenage (6) est couplé à un second engrenage (7) via l'arbre (8).

23. Dispositif selon la revendication 22, **caractérisé en ce que** le premier engrenage (6) et le second engrenage (7) présentent le même nombre de dents.

24. Dispositif selon la revendication 22 ou 23, **caractérisé en ce que** le diamètre extérieur du premier engrenage (6) est égal au diamètre extérieur du second engrenage (7) en termes de valeur.

25. Dispositif selon la revendication 11 ou 12 et l'une des revendications 18 à 24, **caractérisé en ce que** l'arbre (8) est guidé à travers un évidement (2b) du moyeu (2).

26. Dispositif selon l'une quelconque des revendications précédentes, **caractérisé par** une seconde couronne dentée (9), qui est conçue et prévue pour le montage solidaire en rotation sur le véhicule.

27. Dispositif selon la revendication 11 ou 12 et la revendication 26, **caractérisé en ce que** la première couronne dentée (3) est agencée coaxialement à l'axe de direction (L), et **en ce que** la seconde couronne dentée (9) est agencée coaxialement à l'axe de direction (L).

28. Dispositif selon la revendication 26 ou 27, **caractérisé en ce que** le diamètre extérieur de la seconde couronne dentée (9) est égal au diamètre extérieur de la première couronne dentée (3) en termes de valeur.

29. Dispositif selon l'une des revendications 26 à 28, **caractérisé en ce que** la première couronne dentée (3) et la seconde couronne dentée (9) ont le même nombre de dents.

30. Dispositif selon la revendication 22 et l'une des revendications 26 à 29, **caractérisé en ce que** le second engrenage (7) engrène avec la seconde couronne dentée (9).

31. Dispositif selon l'une des revendications 22 à 24 et l'une des revendications 26 à 30, **caractérisé en ce que** les organes élastiques (11) coopèrent avec le levier (10) de telle façon que celui-ci presse le second engrenage (7) élastiquement contre la seconde couronne dentée (9) dans la première position du levier (10).
